# FASCICULE DE BREVET EUROPEEN

(11) **EP 0 664 064 B1**
(45) Date de publication et mention de la délivrance du brevet: **24.02.1999**
(21) Numéro de dépôt: 94924334.9
(22) Date de dépôt: 04.08.1994
(51) Int. Cl.: H04N 1/00

(54) **PROCEDE ET DISPOSITIF DE TRANSMISSION DE TELECOPIES VERS UN MOBILE**
VERFAHREN UND VORRICHTUNG ZUR FAKSIMILEUBERTRAGUNG ZU EINEM FAHRZEUG
METHOD AND DEVICE FOR FAX TRANSMISSION TO MOBILE STATIONS

(30) Priorité: 06.08.1993 FR 9309725
(43) Date de publication de la demande: 26.07.1995
(73) Titulaire: COMPAGNIE FINANCIERE POUR LE RADIOTELEPHONE, ( COFIRA) S.A., F-75008 Paris (FR)
(72) Inventeur: RIBLE, Frédéric, F-92340 Bourg-la-Reine (FR)
(74) Mandataire: Vidon, Patrice
(86) Numéro de dépôt international: FR9400982
(87) Numéro de publication internationale: WO9505048

(56) Documents cités:
- GB-A- 2 240 904
- US-A- 4 679 094
- 43RD IEEE VEHICULAR TECHNOLOGY CONFERENCE, 18 Mai 1993, MEADOWLANDS HILTON, SECAUCUS, NJ, USA pages 718 - 721, XP000393283 TOKUHIRO ET AL. 'PORTABLE TELEPHONE FOR PERSONAL DIGITAL CELLULAR SYSTEM'
- PATENT ABSTRACTS OF JAPAN vol. 15, no. 419 (E-1126) 24 October 1991 & JP,A,03 175 759 (TOKAI RIYOKAKU TETSUDO)

## Description

La présente invention concerne un procédé et un dispositif de transmission de télécopies vers un mobile.

On connaît des moyens permettant de recevoir des télécopies sur des radiotéléphones mobiles connectés aux réseaux radiotéléphoniques analogiques existants. ces dispositifs assurent une adaptation des niveaux des signaux émis et reçus entre le radiotéléphone mobile et le télécopieur embarqué dans le véhicule. La transmission entre le télécopieur émetteur et le télécopieur embarqué s'effectue selon un protocole "Télécopie" (en général en groupe 3 CCITT). Sur le réseau numérique GSM en cours de construction en France, cette fonction "transmission de télécopies" se fera grâce à l'utilisation d'un mode dit "télécopie" permettant la transmission des informations binaires représentant la télécopie. Ce mode n'est pas encore implanté sur les réseaux actuellement en service, mais quand il existera, la réception d'une télécopie sur un radiotéléphone mobile nécessitera également un télécopieur embarqué.

Actuellement, la transmission d'une télécopie vers un radiotéléphone mobile nécessite plusieurs opérations :
- tout d'abord la suppression du "hand-over" ou saut de fréquences, car les coupures de porteuses introduites par les hand-overs entraînent l'interruption de transmission de la télécopie.
- la mise en service simultanée du télécopieur émetteur et du télécopieur du radiotéléphone mobile recevant la télécopie.
- la disponibilité d'un télécopieur à l'intérieur du véhicule recevant la télécopie et interconnecté au radiotéléphone mobile au moyen d'un adaptateur de niveaux de signaux.

On peut en effet neutraliser la fonction hand-over sur les réseaux radiotéléphoniques publics ; toutefois cette neutralisation se fait exclusivement depuis le radiotéléphone mobile et nécessite donc de la part de son utilisateur une information préalable quant à la période à laquelle il va recevoir des télécopies.

De plus, la neutralisation de cette fonction interdit aux véhicules de se déplacer pendant la réception de la télécopie et ne garantit pas une bonne réception, notamment si, au cours de transmission, il y a dégradation de la qualité du canal radio sur lequel s'effectue la communication. En effet, lors d'une conversation sans suppression du hand-over, il y a saut de fréquences vers un canal présentant des caractéristiques de transmission de meilleure qualité, ce saut s'effectue automatiquement à l'initiative du réseau radiotéléphonique qui supervise en permanence la qualité des canaux de transmission. La neutralisation de cette fonction hand-over est donc un handicap important.

A l'aide des moyens actuels, la transmission d'une télécopie à un radiotéléphone mobile s'effectue en composant le numéro de ce radiotéléphone mobile et en transmettant depuis un télécopieur raccordé au réseau téléphonique public, vers le télécopieur raccordé au radiotéléphone mobile : un télécopieur embarqué est donc indispensable, ce qui est relativement coûteux.

On connaît aussi le document "Portable Telephone for Personal Digital Cellular System" du 43.rd IEEE Vehicular Technology Conference, 18 Mai 1993, Meadowlands Hilton, Secausus, NJ, USA, Pages 718-721, XP000393283, Tokuhiro et al qui présente une technique nécessitant un télécopieur associé au radiotéléphone mobile. Une amélioration est proposée, consistant à coder les données transmises pour en augmenter le débit. Toutefois, une reconstruction de la télécopie est nécessaire au niveau du radiotéléphone mobile. Par ailleurs, le problème des pertes de données propres à une télécopie intervenant au cours des "Hand-over" n'est pas résolu par la technique proposée dans ce document.

Ces inconvénients sont résolus selon l'invention, à l'aide du procédé de la revendication 1.

A cet effet, l'invention concerne un procédé et un dispositif de transmission de télécopie assurant l'acheminement de télécopies vers un radiotéléphone 30 mobile ne présentant pas les inconvénients mentionnés ci-dessus: le procédé ne nécessite ni la neutralisation du hand-over, ni l'existence du mode télécopie (pour le GSM), ni l'installation d'un télécopieur embarqué.

Afin de s'affranchir des contraintes de hand-over, la transmission s'effectue selon un protocole de transmission de données par "paquets" entre un serveur radiofax (1) et un module radiofax (2) raccordé au radiotéléphone mobile (3).

L'impression de la télécopie, transmise sous formes données, est ensuite réalisée sur une imprimante graphique classique (4).

Ce mode de transmission par "paquets" offre l'avantage de permettre des interruptions de transmission sans perte d'information et sans coupure de l'envoi de la télécopie, notamment au moment des hand-over. Selon un mode de réalisation du dispositif, la transmission s'effectue selon le protocole dit "AX25" (protocole de type X25 pour la transmission de données par paquets, appliquée au cas de la radio) par lequel la télécopie est transmise "par paquets de données" autorisant des interruptions de la communication radiotéléphonique de longues durées sans coupure de l'opération de transmission de données.

Le module radiofax situé dans le radiotéléphone mobile collecte les différents paquets reçus et reconstitue le fichier de données représentant la télécopie. Il transmet ensuite ces informations à l'imprimante de telle sorte que celle-ci puisse en assurer l'impression.

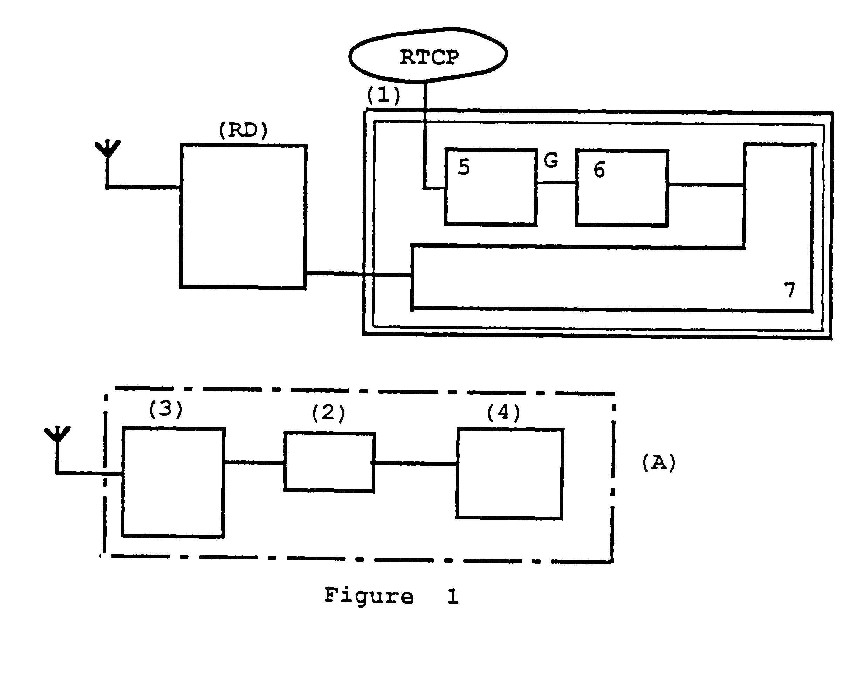

L'ensemble du dispositif est présenté sur la figure 1.
Le dispositif, selon l'invention, comprend un serveur radiofax (1) raccordé au centre de commutation du réseau radiotéléphonique (RD) et un module radiofax (2) raccordé au radiotéléphone mobile (3), comme indiqué ci-dessus. Le serveur radiofax se compose d'un autocommutateur privé (5) raccordé au réseau téléphonique commuté filaire public (RTCP) , d'un serveur de télécopies (6) et d'un frontal radio (7) interfacé avec le centre de commutation du réseau radiotéléphonique (RD)

Chaque possesseur de la fonction "télécopie radio" se voit affecter un numéro de sélection directe à l'arrivée (SDA) dans les numéros SDA attribués à l'autocommutateur privé (5). A chaque numéro de SDA correspond une boîte aux lettres vers laquelle sont aiguillés les fax reçus. Lors d'un appel "télécopie" destiné à l'abonné au radiotéléphone (A), l'autocommutateur (5) oriente l'appel vers le serveur (6) sur une des lignes du groupement (G); le serveur (6) décroche, réceptionne la télécopie, la mémorise et la dépose dans la boîte de l'abonné repérée grâce à la transmission par l'autocommutateur (5), en code fréquences vocales (Q23), du numéro de SDA affecté à l'abonné "télécopie radio".

Le serveur (6) informe ensuite le frontal radio (7) de la présence d'une télécopie pour l'abonné (A). Le frontal radio (7) assure la traduction du numéro SDA en numéro de radiotéléphone, grâce à une table, et prend en charge le fichier télécopie pour le transmettre au module radiofax (2) situé dans le véhicule. Il assure le traitement de ce fichier avec l'algorithme de compression choisi de façon que la transmission radio soit la plus courte possible. Il assure la gestion de la transmission selon le protocole AX25 vers le radiotéléphone mobile.

Le module radiofax situé dans le véhicule reçoit le fichier, assemble les paquets, les décomprime et les présente pour impression à l'imprimante. Ce module gère toute la fonction impression de la télécopie.

Les avantages d'un tel procédé et du dispositif le mettant en oeuvre sont les suivants :
- possibilité de transmettre une télécopie alors que le véhicule est en mouvement, le système étant parfaitement indépendant des hand-overs qui peuvent se produire.
- possibilité de transmettre une télécopie à un radiotéléphone GSM en utilisant le mode données et sans avoir la nécessité de disposer du mode télécopie.
- installation simple du module radiofax et d'une imprimante classique reliée au radiotéléphone mobile.
- algorithme de compression entre le serveur radiofax et le radiotéléphone mobile indépendant de la télécopie et pouvant revêtir diverses formes pour assurer des compressions beaucoup plus fortes que celles assurées par les algorithmes dits de groupe 3 ou de groupe 4.
- envoi en différé des télécopies vers le radiotéléphone mobile permettant plusieurs tentatives vers celui-ci pour assurer un dépôt de télécopie avec la plus grande probabilité de succès.
- numéro de "télécopie radio" différent du numéro de radiotéléphone classique.

## Revendications

1. Procédé de transmission de télécopies vers un mobile (A) comprenant les étapes suivantes :
- transmission de données représentatives d'une télécopie vers un serveur radiofax (1) comprenant un serveur de télécopies (6), par l'intermédiaire d'un réseau téléphonique public (RTCP) ;
- transcription desdites données représentatives d'une télécopie en une série de paquets de données graphiques, dans ledit serveur de télécopies (6) ;
- transmission desdits paquets de données graphiques sur un réseau radiotéléphonique (RD), dudit serveur de télécopies (6) vers un mobile destinataire (A) ;
- assemblage des données graphiques contenues dans lesdits paquets, par un module radiofax (2) compris dans ledit mobile (A), pour reconstituer un fichier de données graphiques ;
- impression directe dudit fichier de données graphiques reconstitué par une imprimante graphique (4) classique.

2. Procédé selon la revendication 1, caractérisé en ce qu'il comprend les étapes supplémentaires suivantes :
- compression de ladite série de données graphiques par des moyens de compression compris dans le serveur radiofax (1) ;
- décompression de ladite série de données graphiques dans ledit mobile (A).

3. Procédé selon l'une quelconque des revendications 1 et 2, caractérisé en ce que ladite transmission desdits paquets de données graphiques s'effectue selon un protocole de type "AX 25".

4. Procédé selon l'une quelconque des revendications 1 à 3, caractérisé en ce que ladite transmission desdits paquets de données graphiques est mise en oeuvre dans une communication GSM en mode transmission de données.

5. Dispositif du type comprenant notamment un serveur radiofax (1) raccordé d'une part à un réseau téléphonique public (RTCP), et d'autre part à un centre de commutation radio d'un réseau radiotéléphonique (RD) et au moins un mobile (A), destinataire d'une télécopie, pourvu d'un radiotéléphone mobile (3), caractérisé en ce que ledit serveur radiofax (1) comprend un serveur de télécopies (6) qui comporte, d'une part, des moyens de transcription de données représentatives d'une télécopie en une série de paquets de données graphiques, et d'autre part, des moyens de transmission desdits paquets de données graphiques sur un réseau radiotéléphonique (RD) dudit serveur de télécopies (1) vers ledit mobile (A) destinataire, et en ce que ledit mobile (A) destinataire comprend une imprimante graphique classique (4) un module radiofax (2) connecté audit radiotéléphone mobile (3) et comprenant des moyens d'assemblage des données graphiques contenues dans lesdits paquets, adaptés à reconstituer un fichier de données graphiques à transmettre à ladite imprimante graphique (4).

6. Dispositif selon la revendication 5, caractérisé en ce que ledit serveur radiofax (1) comprend un frontal radio (7) comportant des moyens de compression de ladite série de données graphiques,
et en ce que ledit module radiofax (2) comprend des moyens de décompression de ladite série de données graphiques.

## Patentansprüche

1. Verfahren zum Übertragen von Fernkopien zu einem Fahrzeug (A), das die folgenden Schritte umfaßt:
- Übertragung der repräsentativen Daten einer Fern kopie zu einem Funkfaxserver (1), welcher einen Server für Fernkopien (6) umfaßt, über ein öffentliches Telefonnetz (RTCP);
- Umwandeln der repräsentativen Daten einer Fernkopie in eine Serie von Paketen graphischer Daten im Server für Fernkopien (6);
- Übertragung dieser Pakete graphischer Daten über ein Funktelefonnetz (RD) vom Server für Fernkopien (6) zu einem empfangenden Fahrzeug (A);
- Zusammensetzen der in den Paketen enthaltenen graphischen Daten durch ein im Fahrzeug (A) befindliches Funkfaxmodul (2), um eine graphische Datei wiederherzustellen;
- direkter Ausdruck dieser wiederhergestellten graphischen Datei durch einen klassischen Drucker (4).

2. Verfahren gemäß Anspruch 1,
dadurch gekennzeichnet, daß es die folgenden zusätzlichen Schritte umfaßt:
- Komprimieren der Reihe graphischer Daten durch Kompressionsmittel, die im Funkfaxserver (1) enthalten sind;
- Dekomprimieren der Reihe graphischer Daten im Fahrzeug (A).

3. Verfahren gemäß einem der Ansprüche 1 oder 2,
dadurch gekennzeichnet, daß die Übertragung der Pakete graphischer Daten gemäß einem Protokoll vom Typ "AX 25" erfolgt.

4. Verfahren gemäß einem der Ansprüche 1 bis 3,
dadurch gekennzeichnet, daß die Übertragung der Pakete graphischer Daten über eine GSM-Verbindung im Datenübertragungsmodus erfolgt.

5. Vorrichtung von der Art, die insbesondere einen Funkfaxserver (1) umfaßt, der einerseits mit einem öffentlichen Telefonnetz (RTCP) und anderseits mit einer Funkvermittlungszentrale eines Funktelefonnetzes (RD) und mindestens einem Fahrzeug (A) verbunden ist, welches der Empfänger einer Fernkopie ist und über ein bewegliches Funktelefon (3) verfügt, dadurch gekennzeichnet, daß der Funkfaxserver (1) einen Server für Fernkopien (6) umfaßt, der einerseits über Mittel zum Umwandeln der repräsentativen Daten einer Fernkopie in eine Reihe von Paketen graphischer Daten und andererseits über Mittel zum Übertragen dieser Pakete graphischer Daten über ein Funktelefonnetz (RD) von dem Server für Fernkopien (1) zum empfangenden Fahrzeug (A) verfügt und dadurch, daß dieses empfangende Fahrzeug (A) über einen klassischen Drucker (4) verfügt, ferner über ein mit dem beweglichen Funktelefon (3) verbundenes Funkfax Modul (2) und zuletzt über Mittel zum Zusammensetzen der in den Paketen enthaltenen graphischen Daten, die dazu geeignet sind, eine Datei graphischer Daten wiederherzustellen, die an den Drucker (4) übermittelt werden können.

6. Vorrichtung gemäß Anspruch 5,
dadurch gekennzeichnet, daß der Funkfaxserver (1) ein Vorschaltfunkgerät (7) umfaßt, welches über Mittel zum Komprimieren der Reihe graphischer Daten verfügt und dadurch, daß das Funkfaxmodul (2) über Mittel zum Dekomprimieren der Reihe graphischer Daten verfügt.

## Claims

1. Method for fax transmission to a mobile station (A) comprising the following steps:
- transmission of data representative of a fax to a radiofax server (1) comprising a fax server (6) via a public switched telephone network (PSTN);
- transcription of the said data representative of a fax as a series of graphical data packets in the said fax server (6);
- transmission of the said graphical data packets over a mobile telephone network (DN) from the said fax server (6) to a destination mobile station (A);
- assembly of the graphical data contained in the said packets by a radiofax module (2) contained in the said mobile station (A) to reconstitute a graphical data file;
- direct printing of the said reconstituted graphical data file by a conventional graphics printer (4).

2. Method according to Claim 1, characterised in that it comprises the following supplementary steps:
- compression of the said series of graphical data by compression means contained in the radiofax server (1);
- decompression of the said series of graphical data in the said mobile station (A).

3. Method according to either of Claims 1 and 2, characterised in that the said transmission of the said graphical data packets is carried out in accordance with a protocol of the "AX 25" type.

4. Method according to any one of Claims 1 to 3, characterised in that the said transmission of the said graphical data packets is implemented in a GSM communication in data transmission mode.

5. Device of the type comprising in particular a radiofax server (1) connected on the one hand to a public switched telephone network (PSTN) and on the other hand to a radio switching centre of a mobile telephone network (DN) and at least one mobile station (A), which is the destination for a fax, provided with a mobile radiotelephone (3), characterised in that the said radiofax server (1) comprises a fax server (6) which contains, on the one hand, means for transcription of data representative of a fax as a series of graphical data packets and, on the other hand, means for transmission of the said graphical data packets over a mobile telephone network (DN) from the said fax server (1 (sic)) to the said destination mobile station (A) and in that the said destination mobile station (A) comprises a conventional graphics printer (4), a radiofax module (2) connected to the said mobile radiotelephone (3) and comprising means for assembly of the graphical data contained in the said packets suited for reconstitution of a graphical data file to be transmitted to the said graphics printer (4).

6. Device according to Claim 5, characterised in that the said radiofax server (1) comprises a radio front-end (7) containing means for compression of the said series of graphical data
and in that the said radiofax module (2) comprises means for decompression of the said series of graphical data.
